# EUROPÄISCHE PATENTSCHRIFT

(11) **EP 1 032 987 B1**
(45) Veröffentlichungstag und Bekanntmachung des Hinweises auf die Patenterteilung: **09.04.2003**
(21) Anmeldenummer: 98965069.2
(22) Anmeldetag: 12.11.1998
(51) Int. Cl.: H04B 7/26, H04J 13/02, H04L 12/28, H04Q 7/36

(54) **VERFAHREN ZUR ZUORDNUNG VON FUNKTECHNISCHEN RESSOURCEN UND EINRICHTUNG ZUM FUNKRESSOURCENMANAGEMENT**
METHOD FOR ALLOCATING RADIO TECHNICAL RESOURCES AND A DEVICE PROVIDED FOR RADIO RESOURCE MANAGEMENT
PROCEDE D'AFFECTATION DE RESSOURCES TECHNIQUES RADIO ET DISPOSITIF POUR LA GESTION DE RESSOURCES RADIO

(30) Priorität: 18.11.1997 DE 19751110
(43) Veröffentlichungstag der Anmeldung: 06.09.2000
(73) Patentinhaber: SIEMENS AKTIENGESELLSCHAFT, 80333 München (DE)
(72) Erfinder: SCHINDLER, Jürgen, D-81369 München (DE)
(86) Internationale Anmeldenummer: DE9803331
(87) Internationale Veröffentlichungsnummer: WO99026359

(56) Entgegenhaltungen:
- EP-A- 0 680 168
- US-A- 5 519 884

## Beschreibung

Die Erfindung betrifft ein Verfahren zur Zuordnung von funktechnischen Ressourcen und eine Einrichtung zum Funkressourcenmanagement, insbesondere in Funk-Kommunikationssystemen mit TD/CDMA-Funkschnittstelle.

In Funk-Kommunikationssystemen werden Nachrichten (beispielsweise Sprache, Bildinformationen oder andere Daten) mit Hilfe von elektromagnetischen Wellen über eine Funkschnittstelle zwischen sendender und empfangender Funkstation (Basisstation bzw. Mobilstation) übertragen. Das Abstrahlen der elektromagnetischen Wellen erfolgt dabei mit Trägerfrequenzen, die in dem für das jeweilige System vorgesehenen Frequenzband liegen. Für zukünftige Mobilfunknetze mit CDMA- oder TD/CDMA-Übertragungsverfahren über die Funkschnittstelle, beispielsweise das UMTS (Universal Mobile Telecommunication System) oder andere Systeme der 3. Generation sind Frequenzen im Frequenzband von ca. 2000 MHz vorgesehen.

Aus DE 197 13 667 ist ein Funk-Kommunikationssystem bekannt, das eine CDMA-Teilnehmerseparierung (CDMA Code Division Multiple Access) nutzt, wobei die Funkschnittstelle zusätzlich eine Zeitmultiplex-Teilnehmerseparierung (TDMA Time Division Multiple Access) aufweist. Es wird folglich ein TD/CDMA-Übertragungsverfahren für die Funkschnittstelle genutzt. Empfangsseitig wird ein JD-Verfahren (JD Joint Detection) angewendet, um unter Kenntnis von Spreizcodes mehrerer Teilnehmer eine verbesserte Detektion der übertragenen Daten vorzunehmen. Dabei ist es bekannt, daß einer Verbindung über die Funkschnittstelle zumindest zwei Datenkanäle zugeteilt werden können, wobei jeder Datenkanal durch einen individuellen CDMA-Code unterscheidbar ist. Das hierbei gezeigte Funk-Kommunikationssystem ist ein Kandidat für ein System der 3. Mobilfunkgeneration.

In einem solchen Funk-Kommunikationssystem besteht die Notwendigkeit, die funktechnischen Ressourcen den einzelnen Verbindungen der Funkschnittstelle zuzuordnen. Dabei ist es beispielsweise aus dem GSM (Global System for Mobile Communications) bekannt, die funktechnischen Ressourcen, d.h. Zeitschlitze, nach dem Prinzip "first come first serve" zu vergeben.

Bei dem Aufbau neuer Verbindungen oder beim Anfordern von funktechnischen Ressourcen für höherratige Dienste, ist ggf. eine Umverteilung der funktechnischen Ressourcen auf die Verbindungen nötig, die zu einem zusätzlichen Signalisierungsaufwand führt.

Der Erfindung liegt folglich die Aufgabe zugrunde, ein Verfahren und eine Einrichtung zum Funkressourcenmanagement anzugeben, die die Häufigkeit der Umverteilung in Funk-Kommunikationssystemen verringert. Die Aufgabe wird durch das Verfahren mit den Merkmalen des Patentanspruchs 1 und die Einrichtung zum Funkressourcenmanagement mit den Merkmalen des Patentanspruchs 14 gelöst. Vorteilhafte Weiterbildungen der Erfindung sind den Unteransprüchen zu entnehmen.

Beim erfindungsgemäßen Verfahren zur Zuordnung von funktechnischen Ressourcen zu Verbindungen einer Funkschnittstelle in einem Funk-Kommunikationssystem werden zumindest ein Soll-Zustand und diskrete Ist-Zustände durch individuelle Kombinationen von Auslastungswerten und Verkehrsmischungswerten der funktechnischen Ressourcen dargestellt. In einer Einrichtung zum Funkressourcenmanagement sind eine Speichereinrichtung zum Speichern zumindest eines Ressourcenverteilungswerts für den Soll-Zustand und eine Steuereinrichtung vorgesehen. In der Steuereinrichtung wird der Ist-Zustand ermittelt, der auf einen aktuellen Auslastungswert und einen aktuellen Verkehrsmischungswert bezogen ist. Die Zuordnung funktechnischer Ressourcen für die Verbindungen wird an den Ressourcenverteilungswert angepaßt.

Abweichend vom "first come first serve"-Prinzip der willkürlichen Zuordnung der Verbindungen wird somit die Ressourcenzuordnung an einem Ressourcenverteilungswert ausgerichtet, der für eine vorgegebene Kombination von Auslastungswert und Verkehrsmischungswert die durchschnittlich zu erwartende Umverteilungshäufigkeit verringert. Der definierte Soll-Zustand bildet eine Entscheidungsinsel, an der sich die Ressourcenzuordnung ausrichtet und die aufwandgünstige Übergänge zu benachbarten Soll-Zuständen sichert. Durch die Diskretisierung möglicher Kombinationen aus Auslastungswerten und Verkehrsmischungswerten in Form von Soll-Zuständen sinkt der Implementierungsaufwand und die Ressourcenzuordnung kann anhand dieser Soll-Zustände stabilisiert werden.

Nach einer vorteilhaften Weiterbildung der Erfindung wird für Veränderungen des Ist-Zustands ein neuer Soll-Zustand ausgewählt, so daß eine Anpassung auf einen Ressourcenverteilungswert des neuen Soll-Zustand erfolgt. Führen eine Anforderung oder Freigabe funktechnischer Ressourcen dazu, daß sich der Ist-Zustand stark verändert und somit der momentan gewählte Ressourcenverteilungswert keine optimale Richtgröße bildet, so wird eine neue Entscheidungsinsel zur Anpassung gewählt.

Besonders vorteilhaft wirkt das erfindungsgemäße Verfahren, falls die funktechnischen Ressourcen durch Zeitschlitze und CDMA-Codes in einem Frequenzband gebildet werden. Bei derart strukturierten funktechnischen Ressourcen kommt das Problem der Energiespitzen bei Nutzung mehrerer CDMA-Codes zu einem Zeitpunkt, beispielsweise in einem Zeitschlitz, hinzu. Um eine Einergiespitze zu vermeiden, die stärkere Interferenzen auf Nachbarzellen verursacht, wäre eine Gleichverteilung der benutzen CDMA-Codes auf alle Zeitschlitze zu wählen. Diese Gleichvereilung und die Verringerung der Umverteilungshäufigkeit sind diametral entgegenstehende Ziele. Es können jedoch mit dem erfindungsgemäßen Verfahren auch anderweitig struktrierte funktechnische Ressourcen verbessert zugeordnet werden.

Das erfindungsgemäße Verfahren ermöglicht einen sehr guten Ausgleich beider Interessen. Der Ausgleich kann zusätzlich für jede einzelne Funkzelle oder eine Gruppe von Funkzellen individuell einstellbar sein. In diesem Fall sind für zwei Funkzellen des Funk-Kommunikationssystems bei gleicher Kombinationen des Auslastungswerts und des Verkehrsmischungswerts jeweils unterschiedliche Ressourcenverteilungswerte gespeichert. Damit können einzelne Zellen, z.B. in Geschäftsgebieten, für höherratige Datendienste und anderer Zellen in ländlichen Gebieten für Sprachdienste optimiert werden.

Werden die Ressourcenverteilungswerte als Verteilungen der CDMA-Codes auf die Zeitschlitze dargestellt, so können ohne weitere Umrechnungen die Zuordnungen der funktechnischen Ressourcen in diese Ressourcenverteilungswerte angepaßt werden. Sind die funktechnischen Ressourcen in unterschiedlich große und unterschiedlich geformte Ressourcenblöcke einteilbar, so sollte die Ressourcenverteilungswerte vorteilhafterweise die Werte bereits berücksichtigen. Damit steigt die Vielfalt möglicher Übergänge zwischen den Soll-Zuständen, so daß der durchschnittliche Umverteilungsaufwand sinkt.

Nach einer weiteren vorteilhaften Ausprägungen der Erfindung sind Schwellwerte zwischen den Soll-Zuständen festgelegt, so daß beim Passieren eines Schwellwertes durch den Ist-Wert die Auswahl eines neuen Soll-Zustands ausgelöst wird. Damit wird die Auswahl des neuen Soll-Zustands erleichtert und die Implementierung des Verfahrens in der Einrichtung zum Funkressourcenmanagement erleichtert.

Der Verkehrsmischungswert wird vorteilhafterweise durch ein Verhältnis von Verbindungen unterschiedlicher Datenrate bestimmt, wobei zusätzlich ein Verhältnis von zu versorgenden Mobilstationen mit unterschiedlicher Ausprägung bezüglich der Nutzung der funktechnischen Ressourcen berücksichtigt werden kann. Verbindungen mit höherer Datenrate benötigen größere Ressourcenblöcke, die bei bestimmten Mobilstationen zusätzlich eine vorgegebene Form haben müssen. Der Verkehrsmischungswert bildet einen Vergleichswert, um unter den verschiedenen Verteilungsszenarios der funktechnischen Ressourcen zu unterscheiden.

Verteilen sich die zuordenbaren funktechnischen Ressourcen auf mehrere Frequenzbänder, so kommt in eine Entscheidungsmatrix für die Soll- und Ist-Zustände eine weitere Dimension hinzu oder die zusätzlichen Frequenzbänder werden innerhalb der Ressourcenverteilungswerte berücksichtigt. Dabei kann vorgesehen sein, daß einzelne Frequenzbänder sukzessive von Verkehrslast befreit werden, um eine dem Träger zugeordnete Sende/Empfangseinrichtung abzuschalten oder das Frequenzband anderen Funkzellen zuzuweisen.

Nach einer weiteren vorteilhaften Weiterbildung der Erfindung werden bei einer Ressourcenfreigabe durch eine Verbindung die freigewordenen funktechnischen Ressourcen einer nicht zeitkritischen Verbindung zugewiesen. Diese Art der Anpassung an den Ressourcenverteilungswert hat zur Folge, daß bei zukünftigen Anforderungen von funktechnischen Ressourcen nur ein geringer Umverteilungsaufwand nötig ist, da die nicht zeitkritische Verbindung problemlos verdrängt werden kann.

Um die Anpassung zu erleichtern werden Übergangsregeln benutzt, bei denen die Position von Subblöcken der funktechnischen Ressourcen vorab festgelegt sind. Damit sinkt die Komplexität der Anpassung. Vorteilhafterweise werden zur Anpassung der Zuordnung funktechnischer Ressourcen an den Ressourcenverteilungswert Formanpassungs-Algorithmen verwendet. Besonders vorteilhaft sind dabei die sogenannten "Packing Steiner Trees"- Algorithmen für sehr genaue Lösungen oder die "Hybrid First Fit Packing"-Algorithmen, die einfach zu implementieren sind und Ergebnisse mit geringem Zeitverzug hervorbringen.

Die Erfindung soll im folgenden anhand von Ausführungsbeispielen unter Bezugnahme auf die Figuren näher erläutert werden.

Dabei zeigen
- FIG 1: ein Funk-Kommunikationssystem,
- FIG 2: die Struktur der Funkschnittstelle,
- FIG 3: den zellularen Aufbau des Funk-Kommunikationssystems,
- FIG 4: eine Entscheidungsmatrix zur Zuordnung funktechnischer Ressourcen,
- FIG 5-8: Beispiele für Ressourcenverteilungswerte, und
- FIG 9: ein Ablaufdiagramm der Ressourcenzuordnung.

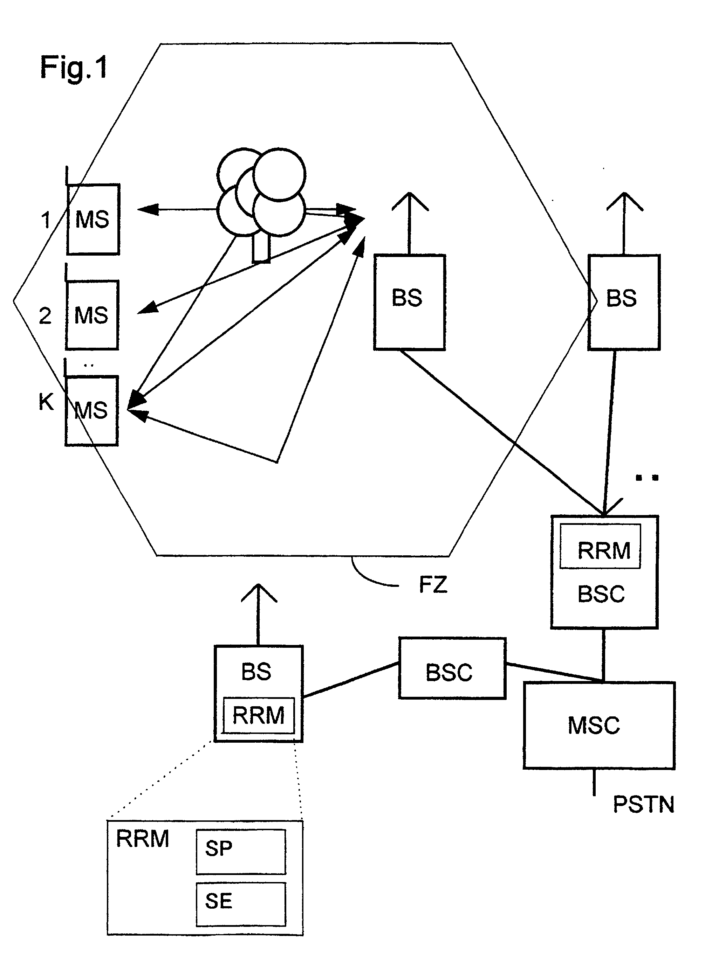

Das in Figur 1 dargestellte Funk-Kommunikationssystem ist ein Mobilfunksystem, das aus einer Vielzahl von Mobilvermittlungsstellen MSC besteht, die untereinander vernetzt sind bzw. den Zugang zu einem Festnetz PSTN herstellen. Weiterhin sind diese Mobilvermittlungsstellen MSC mit jeweils zumindest einem Basisstationskontroller BSC verbunden. Jeder Basisstationskontroller BSC ermöglicht wiederum eine Verbindung zu zumindest einer Basisstation BS, indem die Basisstation BS und die Verbindung zu dieser Basisstation BS gesteuert werden.

Eine solche Basisstation BS ist eine Funkstation, die über eine Funkschnittstelle eine Nachrichtenverbindung zu Mobilstationen innerhalb einer Funkzelle FZ aufbauen kann. In FIG 1 sind beispielsweise Verbindungen zu K Mobilstationen MS dargestellt. Die Funkverbindung zwischen einer Basisstation BS und einer Mobilstation MS unterliegt einer Mehrwegeausbreitung, die durch Reflexionen und Beugungen, beispielsweise an Gebäuden oder Bepflanzungen, zusätzlich zum direkten Ausbreitungsweg hervorgerufen wird.

Ein Operations- und Wartungszentrum OMC realisiert Kontrollund Wartungsfunktionen für das Mobilfunknetz bzw. für Teile davon. Die Funktionalität dieser Struktur ist auf andere Funk-Kommunikationssysteme übertragbar, in denen die Erfindung zum Einsatz kommen kann.

Im Basisstationskontroller BSC ist eine Einrichtung RRM zum Funkressourcenmanagement vorgesehen, die eine Zuordnung von funktechnischen Ressourcen zu den einzelnen Verbindungen vornimmt. Diese Einrichtung RRM steuert somit die Funkschnittstellen mehrerer Funkzellen FZ. Alternativ kann vorgesehen sein, daß eine solche Einrichtung RRM zum Funkressourcenmanagement in einer Basisstation BS integriert ist und damit nur für deren Funkzelle die Zuordnung vornimmt.

Die Einrichtung RRM zum Funkressourcenmanagement enthält eine Speichereinrichtung SP und eine Steuereinrichtung SE. In der Speichereinrichtung SP sind vorgegebene Werte, z.B. Ressourcenverteilungswerte S1, S2 für Soll-Zustände Z1, Z2, gespeichert. Hinzu kommen aktuelle Auslastungswerte L' und Verkehrsmischungswerte Mix', die durch die Steuereinrichtung SE bestimmt werden.

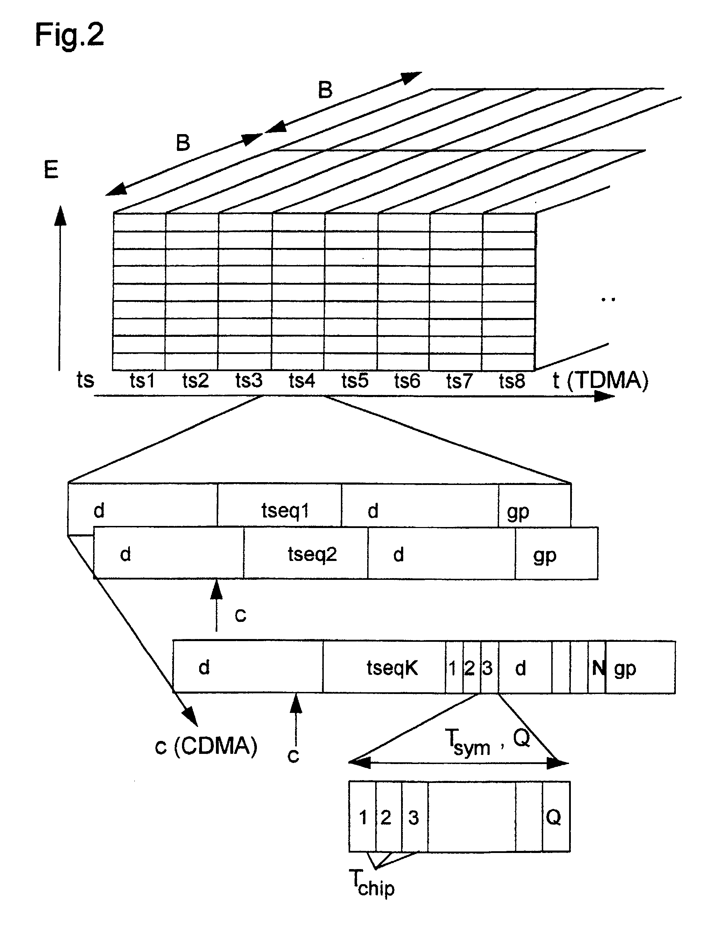

Die Rahmenstruktur der Funkübertragung ist aus FIG 2 ersichtlich. Gemäß einer TDMA-Komponente ist eine Aufteilung eines breitbandigen Frequenzbereiches, beispielsweise der Bandbreite B = 1,6 MHz in mehrere Zeitschlitze ts, beispielsweise 8 Zeitschlitze ts1 bis ts8 vorgesehen. Jeder Zeitschlitz ts innerhalb des Frequenzbereiches B bildet einen Frequenzkanal. Innerhalb der Frequenzkanäle, die zur Nutzdatenübertragung vorgesehen sind, werden Informationen mehrerer Verbindungen in Funkblöcken übertragen. Gemäß einer FDMA-Komponente ist weiterhin zumindest ein weiterer Frequenzbereich der Bandbreite B in der Funkzelle FZ verfügbar.

Diese Funkblöcke zur Nutzdatenübertragung bestehen aus Abschnitten mit Daten d, in denen Abschnitte mit empfangsseitig bekannten Trainingssequenzen tseq1 bis tseqK zur Kanalschätzung eingebettet sind. Die Daten d sind verbindungsindividuell mit einer Feinstruktur, einem CDMA-Code c, gespreizt, so daß empfangsseitig beispielsweise K Verbindungen durch diese CDMA-Komponente separierbar sind.

Die Spreizung von einzelnen Symbolen der Daten d bewirkt, daß innerhalb der Symboldauer T_{sym} Q Chips der Dauer T_{chip} übertragen werden. Die Q Chips bilden dabei den verbindungsindividuellen CDMA-Code c. Weiterhin ist innerhalb des Zeitschlitzes ts eine Schutzzeit gp zur Kompensation unterschiedlicher Signalaufzeiten der Verbindungen vorgesehen.

Innerhalb eines breitbandigen Frequenzbereiches B werden die aufeinanderfolgenden Zeitschlitze ts nach einer Rahmenstruktur gegliedert. So werden acht Zeitschlitze ts zu einem Rahmen zusammengefaßt, wobei beispielsweise ein Zeitschlitz ts4 des Rahmens einen Frequenzkanal zur Nutzdatenübertragung bildet und wiederkehrend von einer Gruppe von Verbindungen genutzt wird. Weitere Frequenzkanäle werden für eine Signalisierung genutzt.

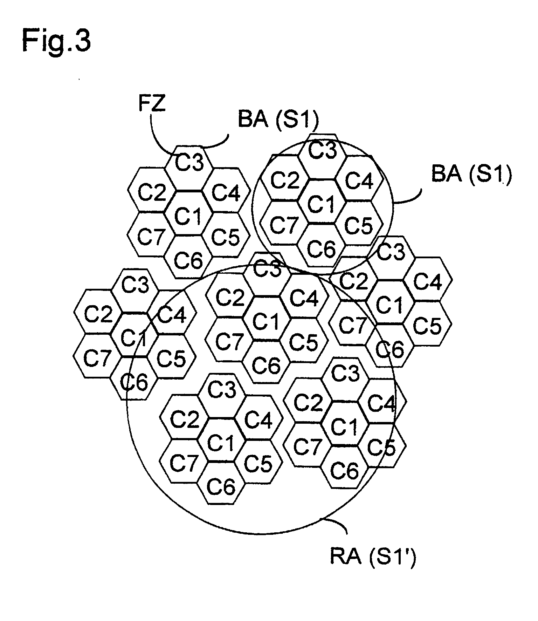

In FIG 3 ist gezeigt, wie in einem zellularen Mobilfunksystem durch Kodeplanung eine begrenzte Anzahl von CDMA-Codes c effizient zugeteilt werden kann. Es werden beispielsweise immer sieben benachbarte durch Sechsecke dargestellte Funkzellen FZ zu einem sogenannten Kode-Cluster zusammengefaßt (in diesem Fall wird ein Frequenz-Cluster durch eine Funkzelle repräsentiert). Innerhalb eines Kode-Clusters wird in jeder Funkzelle ein anderer Satz C1-C7 von CDMA-Codes c verwendet. Bei einer Ausführungsvariante werden diese CDMA-Codes c erst wieder in Funkzellen benachbarter Kode-Cluster verwendet (code reuse).

Das Mobilfunksystem kann unabhängig von der Planung der CDMA-Codes c in unterschiediche Gebiete anhand der zu erwartenden oder der aktuell gemessen Nachfrage an Diensten (Sprachdienst und höherratige Datendienste in Echtzeit oder nicht zeitkritische Datendienste als Paketdatendienste) in Geschäftsgebiete BA und ländliche Gebiete RA unterschieden werden. Natürlich sind auch detailliertere Untergliederungen möglich. Für Funkzellen FZ in Geschäftsgebieten BA werden auch bei gleicher Kombination von später erläuterten Auslastungswerten L und Verkehrsmischungswerten Mix unterschiedliche Ressourcenverteilungswerte S1 als in ländlichen Gebieten RA gespeichert. Die Ressourcenverteilungswerte S1, S1' dienen zur Steuerung einer optimalen Ressourcenverteilung und sind für die beiden Gebiete BA, RA individuell optimiert.

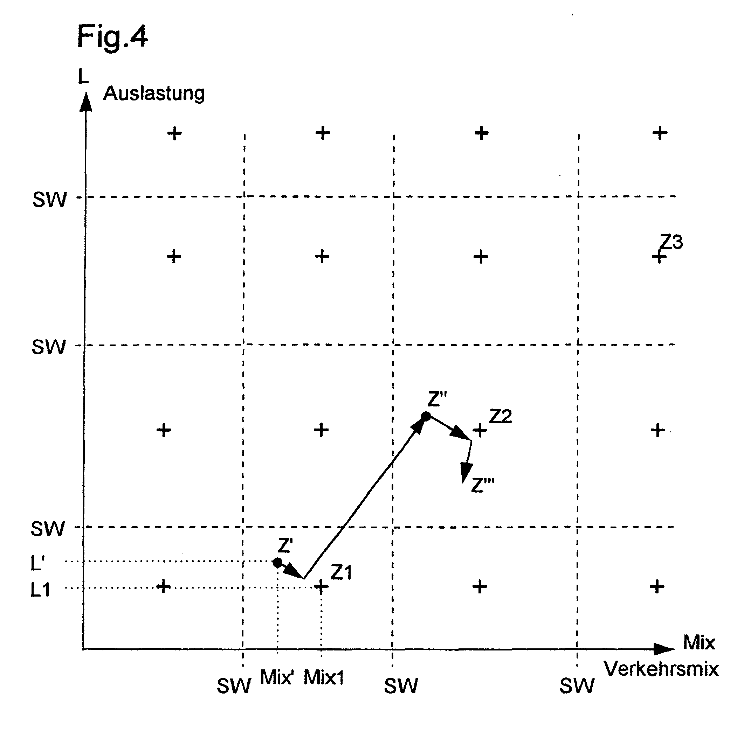

FIG 4 zeigt eine Entscheidungsmatrix mit der Auslastung L der funktechnischen Ressourcen als Ordinate und dem Verkehrsmix als Verkehrsmischungswert Mix als Abszisse. Die Auslastung L und der Verkehrsmischungswert Mix sind im folgenden auf ein Frequenzband bezogen. Eine Erweiterung auf mehrere Frequenzbänder ist jedoch möglich.

Somit lassen sich aktuelle Ist-Zustände Z', Z'' und Z"' der Funkschnittstelle in der Entscheidungsmatrix darstellen. Weiterhin sind mehrere diskrete Soll-Zustände Z1, Z2, Z3, die als Kreuz markiert und dienen als Entscheidungsinseln bei der Zuordnung von funktechnischen Ressourcen. Für diese Soll-Zustände Z1, Z2, Z3 sind erstrebenswerte Ressourcenverteilungen definiert, an denen die aktuelle Ressourcenverteilung angepaßt werden soll.

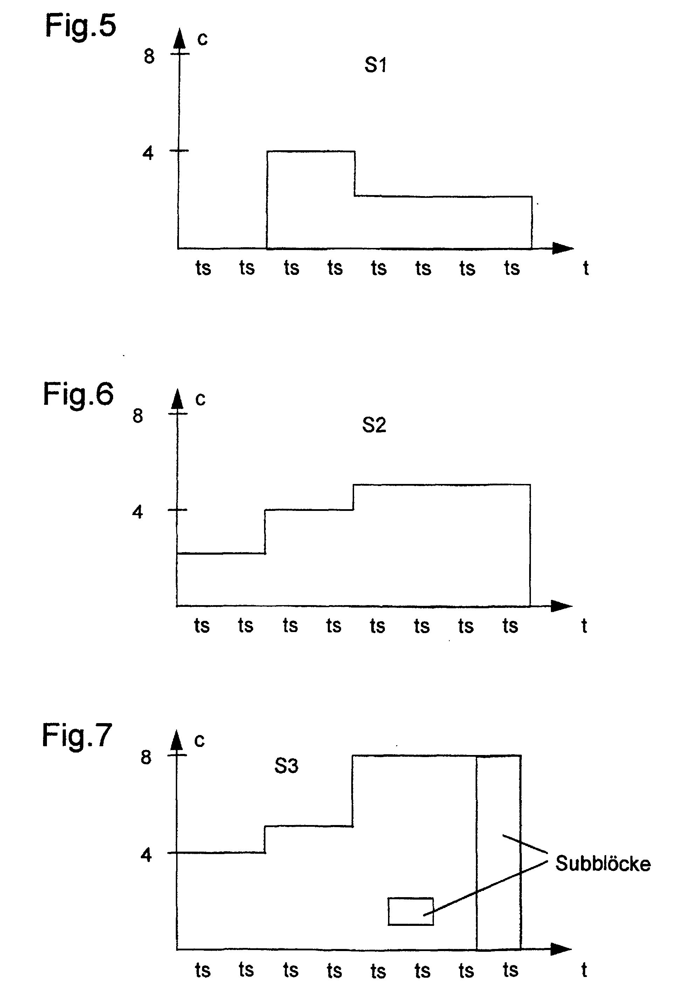

Zur Unterscheidung der Soll-Zustände Z1, Z2, Z3 dienen Schwellwerte SW. Diese Schwellwerte SW markieren somit die Gebiete innerhalb derer eine Anpassung auf den zugehörigen Soll-Zustand Z1, Z2, Z3 erfolgt. Ein Soll-Zustand Z1 ist bezeichnet durch einen Auslastungswert L1 und einen Verkehrsmischungswert Mix1. Für jeden Soll-Zustand Z1, Z2, Z3 ist ein Verkehrsverteilungwert S1, S2, S3 nach den FIG 5 bis 7 gespeichert, der in Form eines "shapes" die erstrebenswerte Ressourcenverteilung beschreibt.

Die Form wird durch das Verhältnis der benutzten CDMA-Codes c in den einzelnen Zeitschlitzen ts angegeben, wobei der kleinste zuteilbare Ressourcenblock ein CDMA-Code c pro Zeitschlitz ts ist. Für höherratige Datendienste ist ein solcher Subblock größer, da die Mobilstation MS mehrere CDMA-Codes c und/oder mehrere Zeitschlitze ts innerhalb einer Verbindung nutzt. Je nach Ausprägung der Mobilstation MS liegt ein solcher größerer Ressourcenblock in einem Zeitschlitz (vertikales Stäbchen) oder er kann sich auf mehrere Zeitschlitze ts verteilen. Durch letzteres wird die Ressourcenverteilung variabler. Auch die Ausprägung der Mobilstationen MS, die sich in der Funkzelle FZ aufhalten, sollte somit bei der Festlegung der Soll-Zustände Z1, Z2, Z3 und ihrer Ressourcenverteilungswerte S1, S2, S3 gebührend berücksichtig werden.

Innerhalb der von Schwellwerten SW umrandeten Gebiete der Soll-Zustände Z1, Z2, Z3 findet eine Anpassung der Zuordnung der funktechnischen Ressourcen an die beispielhaft in den FIG 5 bis 7 gezeigten Ressourcenverteilungswerte S1, S2, S3 statt. Nach FIG 4 liegt für die Funkschnittstelle ein erster Ist-Zustand Z' vor, der durch hohen Anteil von Sprachdiensten und geringer Auslastung geprägt ist. Somit findet eine Anpassung an den ersten Ressourcenverteilungswert S1 statt. Dazu werden Verfahren zur Formanpassung der Ist-Verteilung an den gewünschten Ressourcenverteilungswert S1 benutzt. Vorteilhafte Verfahren sind die "Packing Steiner Trees"- oder die "Hybrid First Fit Packing"-Algorithmen. Als Maß für die Ähnlichkeit dienen gewichtete Formdifferenzen oder einfache kybernetische Shape-Matching-Algorithmen.

Jede weitere Verbindung wird folglich derart zugewiesen, daß der erste Ressourcenverteilungswert S1 erreicht wird. Gegebenenfalls findet eine Umordnung statt. Die Ressourcenverteilungswerte S1 S2, S3 sind jedoch so gewählt, das diese Umordnung selten vorkommt und schnell vonstatten geht.

Durch die Anpassung an die Ressourcenverteilungswerte S1, S2, S3 werden die Kosten, d.h. die Umverteilungsnotwendigkeit, der damit verbundene Signalisierungsaufwand und der Blocking-Faktor, verringert. Die durch einen Vergleich des Ist-Zustands Z' mit dem Soll-Zustand Z1 feststellbaren Kosten können auch dazu benutzt werden, um unter mehreren Trägern auszuwählen und die funktechnischen Ressourcen dort zu nutzen, wo die geringsten Kosten anfallen.

Durch ein externes Ereignis, z.B. die Anforderung zum Verbindungsaufbau für eine Verbindung mit hoher Datenrate, verändert sich die aktuelle Auslastung L' und der Verkehrsmischungswert Mix' drastisch, so daß die in FIG 4 gezeigten Schwellwerte SW passiert werden. Daraufhin wird ein zweiter Soll-Zustand Z2 ausgewählt, auf dessen Ressourcenverteilungswert S2 anschließend die Anpassung durchgeführt wird.

Bei kleinen Änderungen des Ist-Zustandes Z'' auf Z''', die beispielsweise durch Freigabe von funktechnischen Ressourcen durch eine Sprachverbindung ausgelöst werden, wird kein Schwellwert SW passiert und somit kein neuer Soll-Zustand ausgewählt. Im folgenden wird die Anpassung wiederum auf den zweiten Ressourcenverteilungswert S2 durchgeführt.

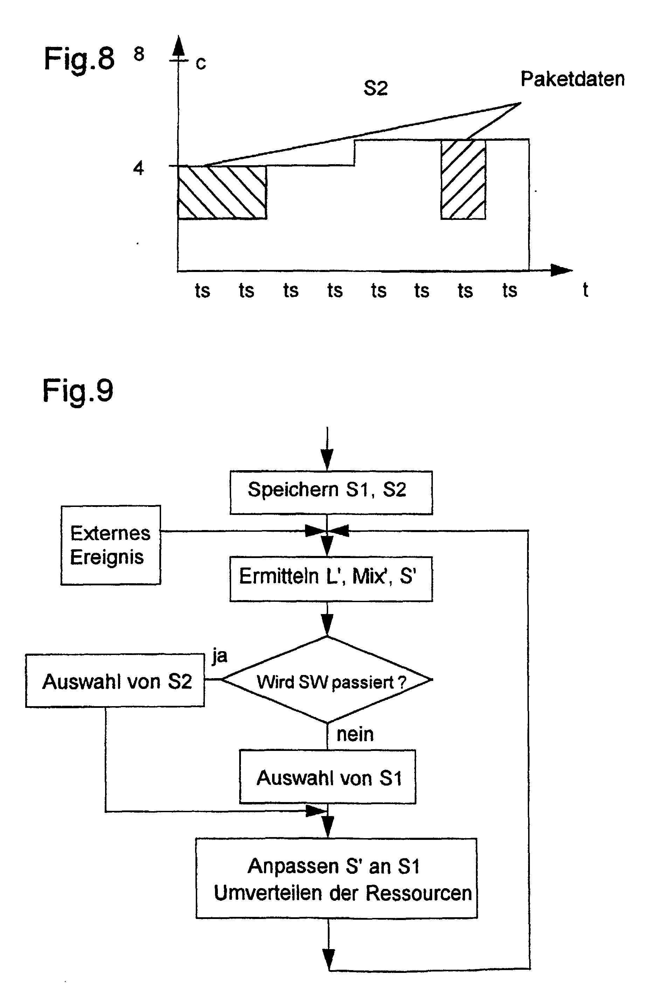

Diese Freigabe von funktechnischen Ressourcen durch eine Sprachverbindung kann gemäß FIG 8 auch dazu genutzt werden, daß entstandene "Loch" durch eine nicht zeitkritische Verbindung, beispielsweise durch einen Paketdatendienst zu füllen. Dies hat den Vorteil, daß bei Bedarf an funktechnischen Ressourcen durch ein neu hinzukommende Verbindung, der Paketdatendienst ohne Probleme verzögert werden kann oder ihm später anderweitige funktechnsiche Ressourcen zugewiesen werden.

FIG 9 zeigt ein Ablaufdiagramm des Zuordnungsverfahrens. Die Ressourcenverteilungswerte S1 und S2 für die verwendeten Soll-Zustände Z1, Z2 in der betreffenden Funkzelle FZ sind vorab gespeichert. Auf den ersten Ressourcenverteilungswert S1 ist die bishere Ressourcenverteilung S' angepaßt. Ein externes Ereignis, beispielsweise eine neue Ressourcenanforderung, führt zu Veränderung des Ist-Zustands Z', der durch den aktuellen Auslastungswert L' und den aktuellen Verkehrsmischungwert Mix' angebbar ist.

Somit wird überprüft, ob der Ist-Zustand Z' einen Schwellwert SW passiert. Ist dies nicht der Fall bleibt der erste Ressourcenverteilungswert S1 ausgewählt. Falls ein Schwellwert SW passiert wird, wird beispielsweise der zweite Ressourcenverteilungswert S2 ausgewählt. Die aktuelle Ressourcenverteilung wird infolge auf den jeweiligen Ressourcenverteilungswert S1, S2 angepaßt.

Weitere Ressourcenfreigaben oder Ressourcenanforderungen führen zu einem erneuten Durchlauf des Verfahrens und ggf. zur einer erneuten Anpassung.

## Patentansprüche

1. Verfahren zur Zuordnung von funktechnischen Ressourcen zu Verbindungen einer Funkschnittstelle in einem Funk-Kommunikationssystem,
wobei zumindest ein Soll-Zustand (Z1) und diskrete Ist-Zustände (Z',Z'',Z''') durch individuelle Kombinationen von Auslastungswerten (L) und Verkehrsmischungswerten (Mix) der funktechnischen Ressourcen angebbar sind,
bei dem in einer Einrichtung (RRM) zum Funkressourcenmanagement
eine Speichereinrichtung (SP) zum Speichern
- zumindest eines Ressourcenverteilungswerts (S1) für den Soll-Zustand (Z1),
und eine Steuereinrichtung (SE) vorgesehen sind,
- wobei in der Steuereinrichtung (SE) der Ist-Zustand (Z') ermittelt wird, der auf einen aktuellen Auslastungswert (L') und einen aktuellen Verkehrsmischungswert (Mix') bezogen ist, und die Zuordnung funktechnischer Ressourcen für die Verbindungen an den Ressourcenverteilungswert (S1) angepaßt wird.

2. Verfahren nach Anspruch 1, bei dem
für Veränderungen des Ist-Zustands (Z') ein neuer Soll-Zustand (Z2) ausgewählt wird und eine Anpassung auf einen Ressourcenverteilungswert (S2) des neuen Soll-Zustand (Z2) erfolgt.

3. Verfahren nach einem der vorherigen Ansprüche, bei dem
die funktechnischen Ressourcen durch Zeitschlitze (ts) und CDMA-Codes (c) in einem Frequenzband (B) gebildet werden.

4. Verfahren nach Anspruch 3, bei dem
die Ressourcenverteilungswerte (S1, S2) als Verteilungen der CDMA-Codes (c) auf die Zeitschlitze (ts) darstellbar sind.

5. Verfahren nach Anspruch 4, bei dem
die Ressourcenverteilungswerte (S1, S2) durch Größe und Form von durch die Mobilstationen (MS) nutzbaren Ressourcenblöcken geprägt sind.

6. Verfahren nach einem der vorherigen Ansprüche, bei dem Schwellwerte (SW) zwischen den Soll-Zuständen (Z1, Z2) festgelegt sind, so daß beim Passieren eines Schwellwertes (SW) durch den Ist-Wert (Z') die Auswahl eines neuen Soll-Zustands (Z2) ausgelöst wird.

7. Verfahren nach einem der vorherigen Ansprüche, bei dem
der Verkehrsmischungswert (Mix) durch ein Verhältnis von Verbindungen unterschiedlicher Datenrate bestimmt wird.

8. Verfahren nach einem der vorherigen Ansprüche, bei dem
der Verkehrsmischungswert (Mix) durch ein Verhältnis von zu versorgenden Mobilstationen (MS) mit unterschiedlicher Ausprägung bezüglich der Nutzung der funktechnischen Ressourcen bestimmt wird.

9. Verfahren nach einem der vorherigen Ansprüche, bei dem
für zwei Funkzellen (FZ) des Funk-Kommunikationssystems bei gleicher Kombinationen des Auslastungswerts (L) und des Verkehrsmischungswerts (Mix) jeweils unterschiedliche Ressourcenverteilungswerte (S1, S1') gespeichert sind.

10. Verfahren nach einem der vorherigen Ansprüche, bei dem bei einer Ressourcenfreigabe durch eine Verbindung zur Anpassung an den Ressourcenverteilungswert (S1) die freigewordenen funktechnische Ressourcen einer nicht zeitkritischen Verbindung zugewiesen werden.

11. Verfahren nach einem der vorherigen Ansprüche, bei dem sich die zuordenbaren funktechnischen Ressourcen auf mehrere Frequenzbänder verteilen.

12. Verfahren nach einem der vorherigen Ansprüche, bei dem zur Anpassung der Zuordnung funktechnischer Ressourcen an den Ressourcenverteilungswert (S1) Übergangsregeln benutzt werden, bei denen die Position von Subblöcken der funktechnischen Ressourcen vorab festgelegt sind.

13. Verfahren nach einem der vorherigen Ansprüche, bei dem zur Anpassung der Zuordnung funktechnischer Ressourcen an den Ressourcenverteilungswert (S1) Formanpassungs-Algorithmen verwendet werden.

14. Einrichtung (RRM) zum Funkressourcenmanagement,
wobei zum Zuordnen von funktechnischen Ressourcen zu Verbindungen einer Funkschnittstelle in einem Funk-Kommunikationssystem zumindest ein Soll-Zustand (Z1) und diskrete Ist-Zustände (Z',Z'',Z''') durch individuelle Kombinationen von Auslastungswerten (L) und Verkehrsmischungswerten (Mix) der funktechnischen Ressourcen angebbar sind,
mit einer Speichereinrichtung (SP) zum Speichern
- zumindest eines Ressourcenverteilungswerts (S1) für den Soll-Zustand (Z1),
und eine Steuereinrichtung (SE) vorgesehen sind,
- wobei in der Steuereinrichtung (SE) der Ist-Zustand (Z') ermittelt wird, der auf einen aktuellen Auslastungswert (L') und einen aktuellen Verkehrsmischungswert (Mix') bezogen ist, und die Zuordnung funktechnischer Ressourcen für die Verbindungen an den Ressourcenverteilungswert (S1) angepaßt wird.

## Claims

1. Method for allocating radio resources to connections of a radio interface in a radio communications system,
in which at least one nominal state (Z1) and discrete actual states (Z', Z'', Z''') can be specified by individual combinations of utilization values (L) and traffic mix values (Mix) of the radio resources,
in which, in a device (RRM) for radio resource management
a storage device (SP) for storage,
- at least one resource distribution value (S1) for the nominal state (Z1),
and a control device (SE) are provided,
- wherein, in the control device (SE), the actual state (Z') is determined which is referred to a current utilization value (L') and a current traffic mix value (Mix'), and the allocation of radio resources for the connections is matched to the resource distribution value (S1).

2. Method according to Claim 1, in which
a new nominal state (Z2) is selected for changes in the actual state (Z') and the new nominal state (Z2) is matched to a resource distribution value (S2).

3. Method according to one of the preceding claims, in which
the radio resources are formed by time slots (ts) and CDMA codes (c) in a frequency band (B).

4. Method according to Claim 3, in which
the resource distribution values (S1, S2) can be represented as distributions of the CDMA codes (c) to the time slots (ts).

5. Method according to Claim 4, in which
the resource distribution values (S1, S2) are **characterized by** size and shape of resource blocks which can be used by the mobile stations (MS).

6. Method according to one of the preceding claims, in which
threshold values (SW) between the nominal states (Z1, Z2) are established so that when a threshold value (SW) is passed by the actual value (Z'), the selection of a new nominal state (Z2) is triggered.

7. Method according to one of the preceding claims, in which
the traffic mix value (Mix) is determined by the ratio of connections at a different data rate.

8. Method according to one of the preceding claims, in which
the traffic mix value (Mix) is determined by a ratio of mobile stations (MS), which are to be covered, having different characteristics with respect to the utilization of the radio resources.

9. Method according to one of the preceding claims, in which
in each case different resource distribution values (S1, S1') are stored for two radio cells (FZ) of the radio communications system with identical combinations of the utilization value (L) and of the traffic mix value (Mix).

10. Method according to one of the preceding claims, in which,
when resources are released, by a connection, the released radio resources are assigned to a non-time-critical connection for adaptation to the resource distribution value (S1).

11. Method according to one of the preceding claims, in which
the allocatable radio resources are distributed over a number of frequency bands.

12. Method according to one of the preceding claims, in which,
to adapt the allocation of radio resources to the resource distribution value (S1), transition rules are used in which the position of sub-blocks of the radio resources are established in advance.

13. Method according to one of the preceding claims, in which,
to adapt the allocation of radio resources to the resource distribution value (S1), shape matching algorithms are used.

14. Device (RRM) for radio resource management, in which, to allocate radio resources to connections of a radio interface in a radio communications system, at least one nominal state (Z1) and discrete actual states (Z', Z'', Z''') can be specified by individual combinations of utilization values (L) and traffic mix values (Mix) of the radio resources,
comprising a storage device (SP) for storing
- at least one resource distribution value (S1) for the nominal state (Z1),
and a control device (SE),
- wherein, in the control device (SE), the actual state (Z') is determined which is referred to a current utilization value (L') and a current traffic mix value (Mix') and the allocation of radio resources for the connections is adapted to the resource distribution value (S1).

## Revendications

1. Procédé d'attribution de ressources radiotechniques à des liaisons d'une interface radio dans un système de communication radio,
dans lequel au moins un état de consigne (Z1) et des états effectifs discrets (Z', Z", Z''') sont indiqués par des combinaisons individuelles de valeurs de charge (L) et de valeurs de mélange de trafic (Mix) des ressources radiotechniques,
dans lequel, dans un dispositif (RRM) de gestion des ressources radio sont prévus:
un dispositif de mémoire (SP) pour conserver
au moins une valeur (S1) de répartition des ressources pour l'état de consigne (Z1),
et un dispositif de commande (SE)
- l'état effectif (Z') qui est associé à une valeur effective de charge (L') et une valeur effective de mélange de trafic (Mix') est déterminée dans le dispositif de commande (SE), l'attribution de ressources radiotechniques aux liaisons étant adaptée à la valeur (S1) de répartition des ressources.

2. Procédé selon la revendication 1, dans lequel; pour des modifications de l'état effectif (Z'), un nouvel état de consigne (Z2) est sélectionné et une adaptation est réalisée à une valeur (S2) de répartition des ressources du nouvel état de consigne (Z2).

3. Procédé selon l'une des revendications précédentes, dans lequel les ressources radiotechniques sont formées par des fenêtres temporelles (ts) et des codes CDMA (c) dans une bande de fréquence (B).

4. Procédé selon la revendication 3, dans lequel les valeurs (S1, S2) de répartition des ressources peuvent être représentées comme répartitions des codes CDMA (c) entre les fenêtres temporelles (ts).

5. Procédé selon la revendication 4, dans lequel les valeurs (S1, S2) de répartition des ressources sont exprimées par la taille et la forme de blocs de ressources qui peuvent être utilisées par les postes mobiles (MS).

6. Procédé selon l'une des revendications précédentes, dans lequel les valeurs de seuil (SW) sont définies entre les états de consigne (Z1, Z2), de telle sorte que lorsqu'une valeur de seuil (SW) est dépassée par la valeur effective (Z'), la sélection d'un nouvel état de consigne (Z2) est déclenchée.

7. Procédé selon l'une des revendications précédentes, dans lequel la valeur de mélange de trafic (Mix) est déterminée par un rapport entre des liaisons présentant différents débits de données.

8. Procédé selon l'une des revendications précédentes, dans lequel la valeur de mélange de trafic (Mix) est déterminée par un rapport entre les postes mobiles (MS) de différentes classes qui doivent être alimentés et l'utilisation des ressources radiotechniques.

9. Procédé selon l'une des revendications précédentes, dans lequel, pour deux cellules radio (FZ) du système de communication radio, des valeurs (S1, S1') à chaque fois différentes de la répartition des ressources sont conservées en mémoire pour de mêmes combinaisons de la valeur de charge (L) et de la valeur de mélange de trafic (Mix).

10. Procédé selon l'une des revendications précédentes, dans lequel dans le cas d'une libération de ressources par une liaison, les ressources radio ainsi libérées sont attribuées à une liaison non critique en termes de temps pour réaliser l'adaptation à la valeur (S1) de répartition des ressources.

11. Procédé selon l'une des revendications précédentes, dans lequel les ressources radiotechniques qui peuvent être attribuées sont réparties entre plusieurs bandes de fréquence.

12. Procédé selon l'une des revendications précédentes, dans lequel, pour l'adaptation de l'attribution des ressources radiotechniques à une valeur (S1) de répartition des ressources, des règles de transfert sont utilisées par lesquelles la position de sous-blocs des ressources radiotechniques sont définies préalablement.

13. Procédé selon l'une des revendications précédentes, dans lequel, pour l'adaptation de l'attribution des ressources radiotechniques à la valeur (S1) de répartition des ressources, on utilise des algorithmes d'adaptation de forme.

14. Dispositif (RRM) de gestion des ressources radio, dans lequel, pour l'attribution de ressources radiotechniques à des liaisons d'une interface radio d'un système de communication radio, au moins un état de consigne (Z1) et des états effectifs discrets (Z', Z", Z"') peuvent être définis par des combinaisons individuelles de valeurs de charge (L) et des valeurs de mélange de trafic (Mix) des ressources radiotechniques,
avec un dispositif de mémoire (SP) pour conserver en mémoire:
- au moins une valeur (S1) de répartition des ressources pour l'état de consigne (Z1),
et un dispositif de commande (SE) est prévu,
- l'état effectif (Z') qui concerne une valeur de charge effective (L') et une valeur de mélange de trafic effective (Mix') étant déterminé dans le dispositif de commande (SE), l'attribution des ressources radiotechniques aux liaisons étant adaptée à la valeur (S1) de répartition des ressources.
